Europäisches Patentamt

European Patent Office

Office européen des brevets

(19)

(11) Publication number: **0 435 792 A2**

(12) # EUROPEAN PATENT APPLICATION

(21) Application number: **90420566.3**

(22) Date of filing: **21.12.90**

(51) Int. Cl.⁵: **C08J 5/18, B32B 27/08, B65D 65/40, // C08L27:08**

(30) Priority: **28.12.89 US 458490**

(43) Date of publication of application:
**03.07.91 Bulletin 91/27**

(84) Designated Contracting States:
**AT BE CH DE DK ES FR GB GR IT LI LU NL SE**

(71) Applicant: **AMERICAN NATIONAL CAN COMPANY**
**8770 West Bryn Mawr Avenue**
**Chicago, Illinois 60631 (US)**

(72) Inventor: **Blemberg, Robert John**
**617 Wildrose Lane**
**Appleton, WI 54915 (US)**
Inventor: **Eckstein, John Paul**
**1206 Glenayre Drive**
**Neenah, WI 54956 (US)**
Inventor: **Nordness, Mark Edward**
**2025 Russet Court, // 20**
**Appleton, WI 54914 (US)**

(74) Representative: **Jacquet, Michel et al**
**PECHINEY 28, rue de Bonnel**
**F-69433 Lyon Cédex 03 (FR)**

(54) **Vinylidene chloride copolymer films.**

(57)    Materials made with vinylidene chloride methylacrylate copolymer having a methylacrylate content of at least about 8 percent by weight. Single and multiple layer structures, including sheets, laminates, films, packages and the like, made with a layer of the subject vinylidene chloride methylacrylate copolymer benefit from improved properties of elongation, tensile energy absorption, secant modulus, and impact strength. Subjectively, such materials are quieter and softer than comparable films having lower methylacrylate content and equivalent additives. In the alternative, the materials can be made with lower levels of, or no, plasticizer additive, without a significant reduction in barrier properties.

FIG. 1 B

EP 0 435 792 A2

# VINYLIDENE CHLORIDE COPOLYMER FILMS

## BACKGROUND OF THE INVENTION

This application is related to previous applications corresponding to the publication US-A-4 894 226, EP-A-302 711, EP-A-322 189, US-A-4 944 972 and EP-A-345 987, all of which are incorporated herein by reference.

Reference is also made to commonly owned, and concurrently filed, United States patent application serial numbers 458 486-458 485-458 484- 458 483- 458 489 - 458 487 - 458 488 each of which is hereby incorporated herein by reference.

This invention relates to vinylidene chloride copolymers (VDC-CP). These copolymers are known to have a number of beneficial properties for packaging of a variety of products. They provide good barriers to the transmission of a number of gases and are widely used as barriers to transmission of oxygen and moisture vapor. However it is known that there are problems associated with the use of vinylidene chloride copolymers. For example, they tend to be stiff, rigid, and brittle. This is problematical because, in many applications, it is desired that the films or sheet structures and packages of which the vinylidene chloride copolymers are comprised be soft and flexible.

Vinylidene chloride vinyl chloride copolymers (VDC-VC) are known to be subject to degradation during extrusion processing. Recently available vinylidene chloride methylacrylate copolymers (VDC-MA), containing methylacrylate (MA) comonomer, have been found to be even more sensitive than VDC-VC to degradation during extrusion processing. Typically, the extrusion fabricating process is periodically shut down to clean the degraded material out of the extrusilon processing equipment. To overcome the problems of stiffness, rigidity, brittleness, and degradation, it is normal practice to provide one or more additives to the base resin, to make a compounded vinylidene chloride copolymer resin which is more resistant to degradation, and which is more flexible and resilient. To retard degradation, it is known to compound VDC-CP by adding an oil additive such as epoxidized linseed oil (ELO). For purposes of this teaching, ELO is considered to be a stabilizer and is not considered a plasticizer. But the ELO is only partially effective to retard degradation in conventional VDC-CP.

It is also known to add, for example, ethylene vinyl acetate copolymer (EVA) as a softening additive, also known as a plasticizer, to make a softer, more flexible and resilient film. While adding EVA improves softness, flexibility, and resilience, as the amount of EVA added is increased, the oxygen barrier and the water vapor barrier properties are reduced undesirably, and in excess to the proportion of decrease in the percent vinylidene chloride component of the VDC-CP in the compounded composition.

Inclusion of such plasticizer materials also adds other complicating factors. For example, those VDC-MA structures which are intended for packaging products for consumer's internal use, such as medical or food packaging applications, face issues related to safety of the materials from which the packaging is fabricated, especially issues of migration of the additives from the packaging material into the products being packaged. Accordingly, the additives, as well as the base resins need to be carefully screened for their contributions, and drawbacks.

Generally, the properties of films containing VDC-MA are preferred over films containing VDC-VC because the VDC-MA generally provides better oxygen and moisture barrier properties.

It is desired in this invention to provide packages or packaging materials, especially flexible packaging materials, which include a polymeric layer having the desired high levels of oxygen barrier and moisture vapor barrier and which have the desired softness, flexibility, and resilience without the inclusion of high levels of plasticizing additive in the barrier layer, and directed at softening that barrier layer.

It is desired to provide vinylidene chloride copolymer barrier films which are easier to fabricate and which provide longer production runs without shut downs for cleaning equipment.

Applicants have surprisingly discovered that the desired properties, including softness, flexibility, resilience, and reduced degradation are obtained in materials made with a VDC-MA composition which contains at least about 8 percent, preferably at least about 8.5 percent, more preferably at least about 9 percent, and most preferably about 9.5 percent methylacrylate ("percent" is hereinafter understood to mean percent by weight of the copolymer), and which does not include the normal amount of plasticizing additive.

It is an object of this invention to provide a soft, flexible, and resilient film which is or includes at least one layer of a VDC-MA, and which has barrier properties (to oxygen transmission and water vapor transmission) representative of the barrier properties commonly associated with VDC-MA's which have conventional amounts of additives or less.

Another object of this invention is to provide such a film which has a secant modulus of no more than about 1137 MPa, preferably no more than 1033 MPa, and most preferably no more than 689 MPa, whereby the film exhibits improved properties of softness, and resilience when flexed.

Another object of this invention is to provide single and multilayer structures containing VDC-MA, the structures including sheets, laminates, films, film packages and the like wherein the methylacrylate content of the copolymer, of the single layer structure, or of at least one layer of the multilayer structure, or of a package made at least partially from either of them, is at least about 8 percent, preferably at least about 8.5 percent, more preferably at least about 9 percent, and most preferably about 9.5 percent.

Another object of this invention is to provide the above-mentioned single layer and multilayer films and structures and packages made at least partially therefrom, and containing VDC-MA, (hereinafter individually and collectively referred to as "materials") which are softer, and more flexible, resilient, and tougher, at least for a time, than VDC-MA materials whose methylacrylate content is less than about 8 percent.

Another object of this invention is to provide the aforementioned materials which have improved elongation and tensile energy absorption.

Another object of this invention is to provide the afore-mentioned materials which provide improved processability and lower manufacturing costs than are attainable with VDC-MA materials whose MA content is less than about 8 percent.

Still another object of this invention is to utilize these materials to make pouches for fluid products, which, due to their softness, flexibility, resilience, toughness, and/or extensibility, perform better in drop or burst tests than pouches made from VDC-MA materials whose MA content is less than about 8 percent.

Yet another object of this invention is to utilize these materials in the production of shrinkable plastic bags (for products such as meats, cheeses, etc.) to provide the bags with improved puncture, slit and abuse resistance.

Another object of this invention is to provide a polymeric film comprising a layer of a vinylidene chloride methylacrylate copolymer, the vinylidene chloride methylacrylate copolymer layer having less than 1 percent by weight, preferably less than 0.5 percent by weight, based on the total copolymer, of plasticizer, and having an average secant modulus of no more than about 1137 MPa, preferably no more than about 1033 MPa more preferably no more than about 689 MPa.

## SUMMARY OF THE DISCLOSURE

These and other objects are attained in the materials of this invention which comprise a layer of a vinylidene chloride copolymer, in turn comprised of vinylidene chloride and at least about 8 percent methylacrylate, preferably at least about 8.5 percent methylacrylate, more preferably at least about 9 percent methylacrylate and most preferably about 9.5 percent methylacrylate. Although it is expected that the advantages of this invention would be retained with MA contents above 12 percent, it is difficult, and not currently practical, to handle these high MA content resins, because at these levels, the copolymer resin tends to be difficult to feed, and tends to be overly sticky and caked, rather than free flowing.

The vinylidene chloride copolymer layer preferably has an average of MD and CMD secant modulus of no more than about 1137 MPa, preferably no more than about 1033 MPa, more preferably no more than 861 MPa, most preferably no more than about 689 MPa, and less than 3 percent, preferably less than 1 percent, more preferably 0.5 percent or less by weight of plasticizer. Most preferably, no effective amount of plasticizer is used. Preferred embodiments of the invention include one or more additional layers, preferably one or more polymeric layers, at least one of which is desirably well adhered to the vinylidene chloride copolymer layer.

## BRIEF DESCRIPTION OF THE DRAWINGS

FIGURES 1A and 1B show cross-sections of typical films of the invention.

FIGURES 2A and 2B show charts of the secant modulus of single layer VDC-MA films.

FIGURES 3A and 3B show charts of the elongation of single layer VDC-MA films.

FIGURES 4A and 4B show charts of the Tensile Energy Absorption (TEA) of single layer VDC-MA films.

FIGURES 5 shows a chart of the dart drop impact strength of single layer VDC-MA films.

FIGURE 6 shows a chart illustrating the moisture vapor transmission rate of single layer VDC-MA films.

FIGURE 7 shows a chart illustrating the oxygen transmission rate of single layer VDC-MA films.

FIGURES 8 and 9 show charts illustrating the crystallinity index of single layer VDC-MA films with respect to time after extrusion fabrication of the films.

FIGURE 10 shows a chart illustrating secant modulus of single layer VDC-MA films with respect to time after extrusion fabrication of the films.

FIGURES 11 and 12 show typical pouch-type packaging made with films of the invention.

3

## DETAILED DESCRIPTION OF THE INVENTION AND ILLUSTRATED EMBODIMENTS

The present invention is directed to materials, preferably single layer films and multilayer films and film packages wherein at least one layer is comprised of a vinylidene chloride methylacrylate copolymer having at least about 8 percent, preferably at least about 8.5 percent, more preferably at least about 9 percent and most preferably about 9.5 percent by weight methylacrylate. The materials of the invention include single and multiple layer structures, including sheets, laminates, films, film packages, and the like having one or more layers comprised of the vinylidene chloride methylacrylate copolymer of this invention.

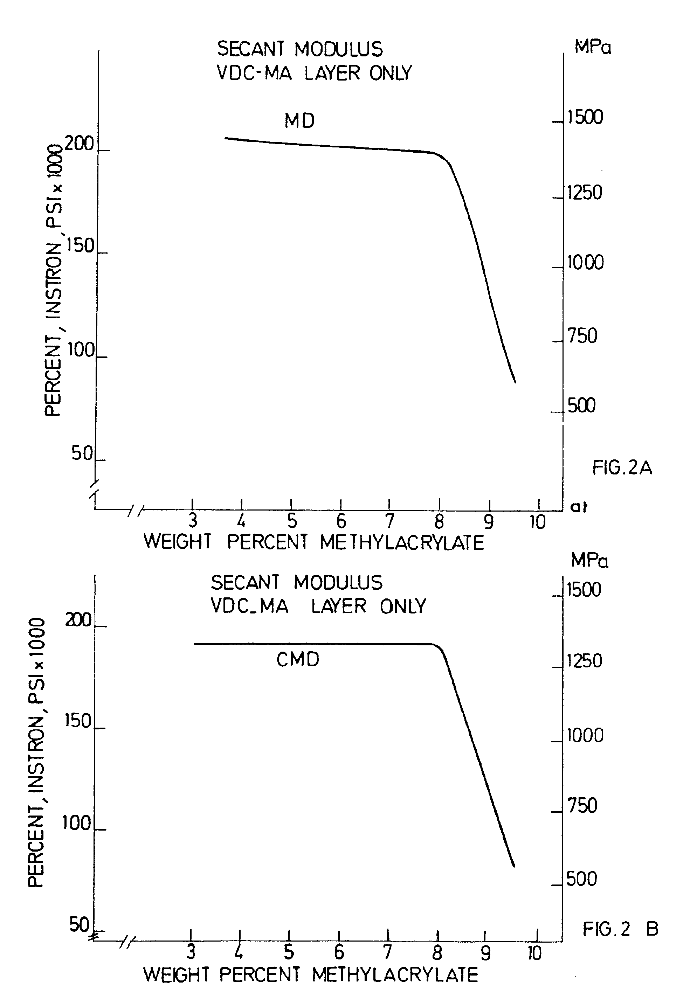

FIGURE 1A illustrates a single layer film 10 made with a vinylidene chloride methylacrylate copolymer having an above amount of methylacrylate comonomer.

FIGURE 1B illustrates a three layer film 12 having a first layer 14 comprising the above recited vinylidene chloride methylacrylate copolymer having an above amount of methylacrylate comonomer. Layers 16 and 18 represent second and third layers on either side of the vinylidene chloride methylacrylate copolymer layer 14. Layers 16 and 18 can be, for example, ethylene vinyl acetate copolymer (EVA). Neither the number, nor the composition, nor the arrangement of the layers, is limited, other than that there is at least one layer 14 of VDC-MA having at least about 8 percent MA.

The film of FIGURE 1A is preferably formed by extrusion, but it can also be formed by a variety of conventional film forming processes, an example of which is solution coating followed by stripping the VDC-MA layer from the substrate onto which it is coated.

The multiple layer film shown in FIGURE 1B is preferably fabricated by coextrusion, more preferably by slot or annular coextrusion, of the three illustrated layers. Another method of fabricating the film of FIGURE 1B is adhesive lamination whereby a layer of adhesive (not shown) is used between layer 14 and respective ones of layers 16 and 18 to bond layer 14 to each of the respective layers. A suitable adhesive for bonding layer 14 to the aforementioned layers 16 and 18 is a curing type urethane adhesive. Other methods of making the multiple layer films of the invention, including those represented by FIGURE 1B, will be obvious to those of ordinary skill in the art, and are readily adapted to the vinylidene chloride methylacrylate copolymer materials of the invention. Exemplary of such processes are extrusion coating, coextrusion coating, solution coating, and the like. Thus, all such known processes are contemplated as acceptable for fabrication of structures, including sheets, laminates, films, film packages, trays, bowls, and other containers and the like of this invention.

Applicants have investigated the properties of single layer films made with vinylidene chloride methylacrylate copolymers. FIGURES 2A and 2B represent respectively the secant modulus in the machine direction (MD) and the cross machine direction (CMD) of single layer films of VDC-MA, in relationship to the amount of methylacrylate comonomer in the copolymer. As seen in FIGURES 2A and 2B, it has been surprisingly discovered that, beyond a certain amount of methylacrylate, the secant modulus of the film is unexpectedly less as the fraction of methylacrylate is greater. With respect to FIGURE 2A, it is seen that the graph of the secant modulus in the machine direction has a significant inflection at about 8 percent methylacrylate, after which the secant modulus decreases more rapidly. Referring to FIGURE 2B, the secant modulus in the cross machine direction begins to be less as the fraction of methylacrylate reaches about 8 percent.

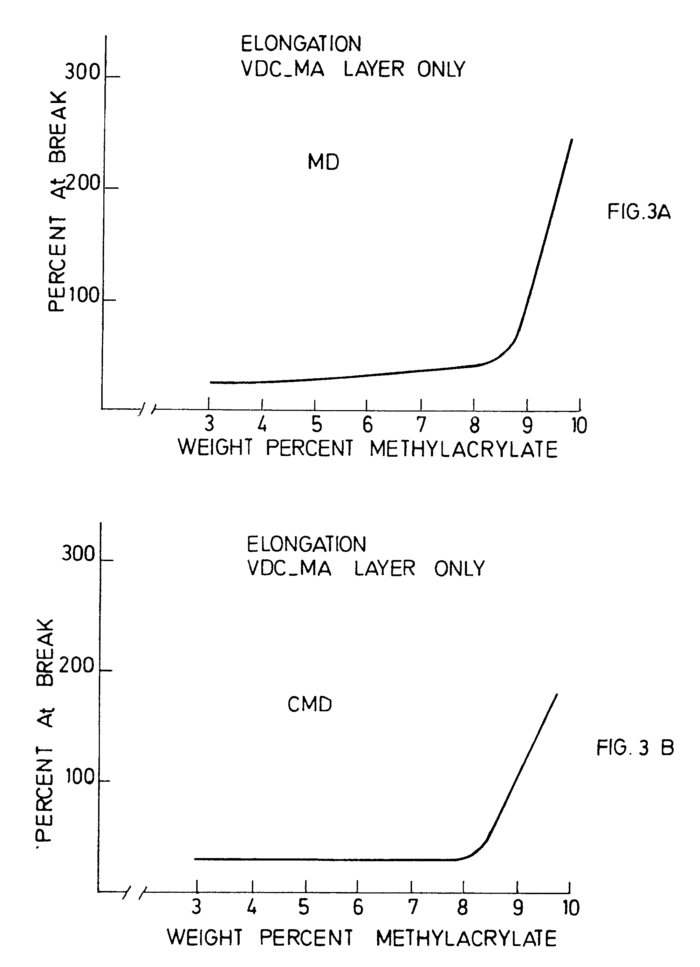

Referring to FIGURES 3A and 3B, it is seen that the elongation of the same VDC-MA single layer films is substantially increased at approximately the same compositions that exhibit a reduced secant modulus.

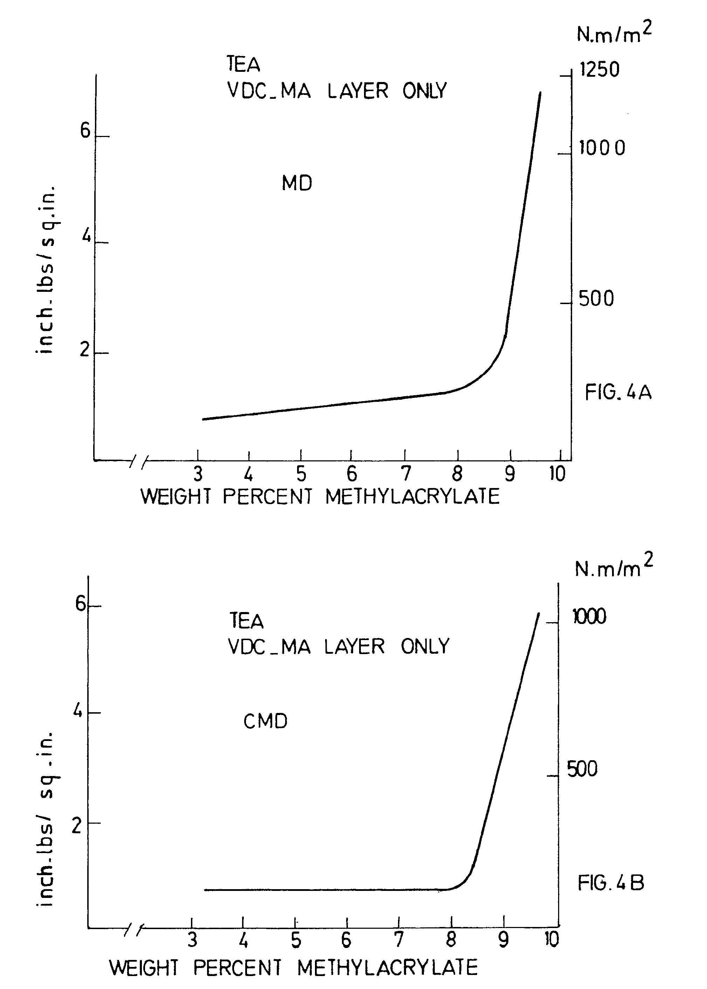

The total energy absorption (TEA) of the same VDC-MA single layer films, FIGURES 4A and 4B, is also greater at about the same amount of methylacrylate comonomer.

Referring now to the combination of FIGURES 2-5, related to the secant modulus, the elongation, the TEA, and the dart drop, it is seen that the change in the directions of the plotted lines of the respective several graphs are responsive to approximately the same amount of methylacrylate. Namely a methylacrylate content of at least about 8 percent, and preferably about 8.5 percent methylacrylate, provides a change in the direction of the curve, with each of the curves illustrating a change in the represented properties at about 8.5 percent methylacrylate.

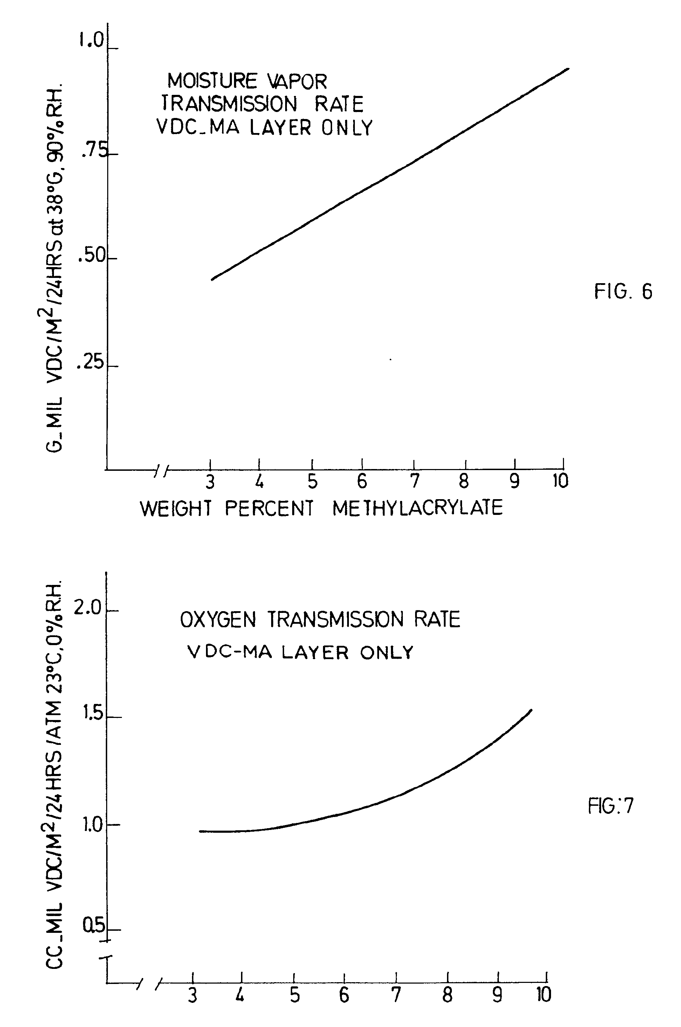

The amount of methylacrylate in the copolymer is selected according to the properties desired for the particular end use. As described herein, the improvement in properties illustrated is seen when the methylacrylate content reaches about 8 percent. The improvements in the softness, resilience, stiffness, and toughness of the film increase further as the methylacrylate content increases. However, as stated above, it is difficult to handle copolymers having high MA content and as illustrated in FIGURES 6 and 7, the water vapor transmission rate (WVTR) and the oxygen transmission rate, of the single layer VDC-MA film, increase as the methylacrylate content is increased. Thus, while the amount of methylacrylate in the copolymer can in theory be increased without limit, there is a practical upper limit to the amount of methylacrylate which can be used while still achieving the WVTR and oxygen transmission rate objectives, and while having a copolymer composition which can be handled with conventional equipment. Thus, while up to 15 percent methylacrylate is contemplated, a typical upper limit for the methylacrylate content is about 12 percent methylacrylate, preferably about 10 percent methylacrylate. While levels higher than about 12 percent of methylacrylate are acceptable with respect to the characteristics illustrated in FIGURES 2-5, typically the methylacrylate content will be no more than about 12 percent, preferably about 10 percent, in order to obtain a preferred balance of all the desired properties described above, and allow for economical production of the copolymer resin.

FIGURES 6 and 7 illustrate the gradual increase in the water vapor transmission rate and the oxygen transmission rate as the level of methylacrylate comonomer is increased. They also illustrate the continuity of the WVTR and the oxygen transmission rate patterns.

In the several FIGURES 2-7 (including 2A, 2B, 3A, 3B, 4A, and 4B) the data have been normalized to represent a 1 mil (about 25 microns) thick VDC-MA layer. The data for FIGURES 2-7 were collected at a point in time four weeks after extrusion fabrication of the films. THe films were stored during that four week period in controlled conditions at 73 degrees F. (23 degrees C), 50 percent relative humidity.

EXAMPLE 1

A three layer film was coextruded in an upward direction by a blown extrusion process, using a conventional air ring, and conventional collapsing equipment above the frost line. The film contained a core layer of vinylidene chloride copolymer having methylacrylate content of 9.5 percent and opposing surface layers of NPE 963 low density polyethylene obtained from Quantum Chemical Corporation, USI Division, Cincinnati, Ohio. The film was nominally 3 mils (75 microns) thick. The core layer was approximately 25 microns thick, with the balance of the thickness being approximately equally distributed between the two outer surface layers.

For purposes of testing and illustrating the properties of the vinylidene chloride methylacrylate copolymer layer, the outer layers were separated from the core layer, and the properties of the core layer were measured. The VDC-MA core layer was separated from the LDPE layers by the usual method of adhering a piece of tape to the opposing outer surfaces of the film at the edges thereof, and pulling the tape pieces away from each other, whereby the film layers are peeled apart. Table 1 shows the properties of the core layer.

TABLE 1

| Example No. | Percent MA | $O_2TR^{(a)}$ | $MVTR^{(b)}$ | Elongation Percent | | TEA in-lbs/in$^2$ (N x m/m$^2$) | | Secant Modulus (MPa) MPSI | | Dart Drop ft LBS.(J) |
|---|---|---|---|---|---|---|---|---|---|---|
| | | | | MD | CMD | MD | CMD | MD | CMD | |
| 1 | 9.5% | 1.79 | 1.03 | 206% | 163% | 6.9 (1207) | 5.3 (927) | 87 (600) | 82 (565) | .24 (0.325) |

(a) Oxygen transmission = CC-MIL VDC-MA/M$^2$/24 HRS/ATM 73 degrees F. (23 degrees C ), 0% R.H.

(b) Moisture Vapor Transmission Rate = G-MIL VDC-MA/M$^2$/24 HRS at 100 degrees F (30 degrees C ), 90% RH

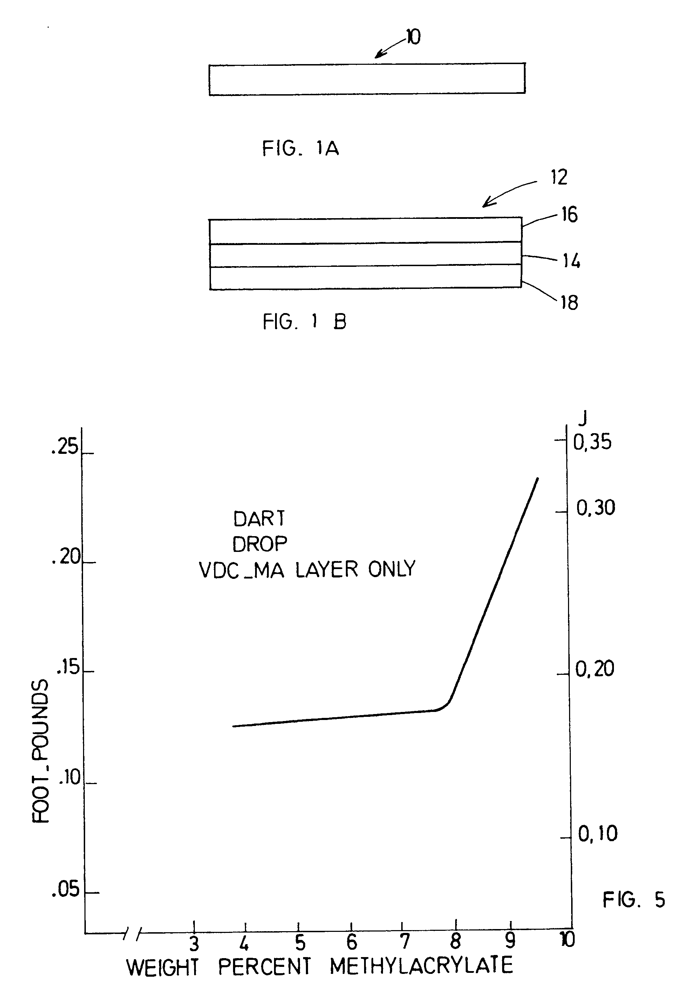

FIGURES 2A and 2B, 3A and 3B, and 4A and 4B, and the corresponding data in Table 1, were generated by testing film samples according to ASTM D-882. FIGURE 5 and the corresponding data in Table 1, were generated by testing film samples according to ASTM D4272. FIGURE 6 was generated by use of pending ASTM F-1249. The oxygen transmission rates in FIGURE 7, and the corresponding data in Table 1, were generated by testing film samples on an OXTRAN oxygen analyzer according to ASTM D 3985.

As seen in the graphs, and as confirmed in part by the data in Table 1, the properties of vinylidene chloride methylacrylate copolymer films made with compositions having at least about 8 weight percent methylacrylate comonomer unexpectedly differ from the properties of films which are otherwise the same, but which are made with compositions having lesser amounts of methylacrylate comonomer in the copolymer. The inflections in the graphs are all seen to occur at about 8 to about 8.5 percent methylacrylate.

The graphs illustrated in FIGURES 2-5 (e.g. 2A and 2B) were generated by testing individual samples of the core layer of VDC-MA film generated according to the above example, as well as other samples using vinylidene chloride methylacrylate copolymers having lower amounts of methylacrylate comonomer in the VDC-MA copolymer. In each case, a three layer structure was initially fabricated. The VDC-MA layer was then separated from the other layers. The tests were performed on the individual vinylidene chloride methylacrylate copolymer layers. The compositions of the VDC-MA layers tested varied only by the amount of methylacrylate comonomer, and typical variations in molecular weight. Each of the films tested and reported in FIGURES 2-7 contained the same amount of the same additive, epoxidized linseed oil, and was substantially free from plasticizer.

It is acknowledged that there exist two data points which are not represented by the corresponding graphs/FIGURES to which they apply. One such data point applies to FIGURE 3A. The other such data point applies to FIGURE 4A. The data in FIGURE 4A is a mathematically calculated result of the data in FIGURE 3A. The inventors are not able to explain these two errant data points, but since the errant data points merely represent only two data points for one film as compared with the data stream for 8 films, the inventors believe and submit that the graphs illustrated in FIGURES 2-7 are representative of the films of the invention.

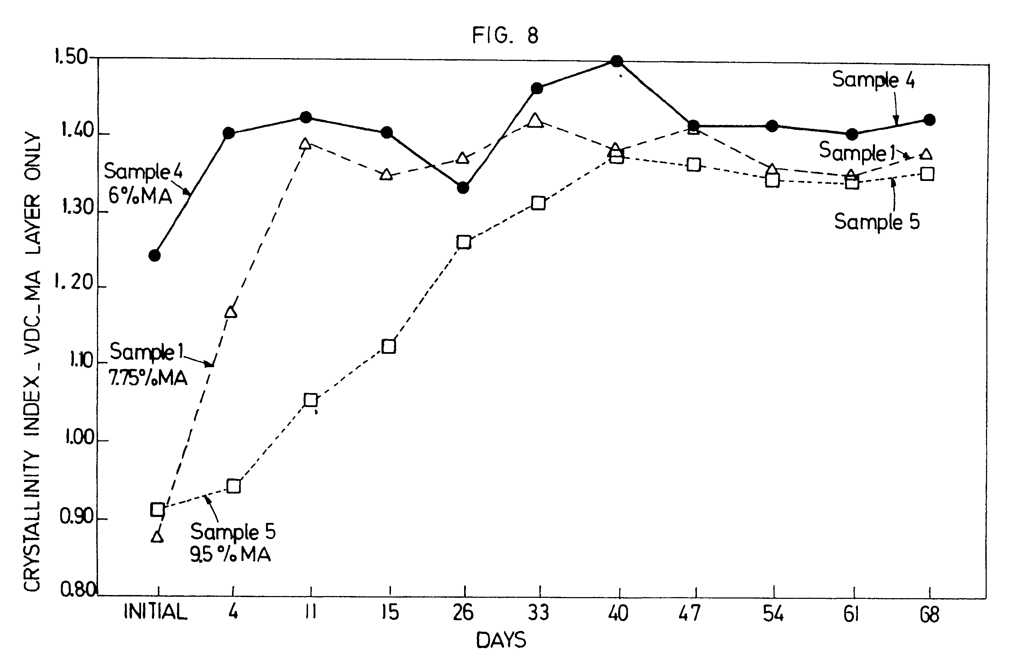

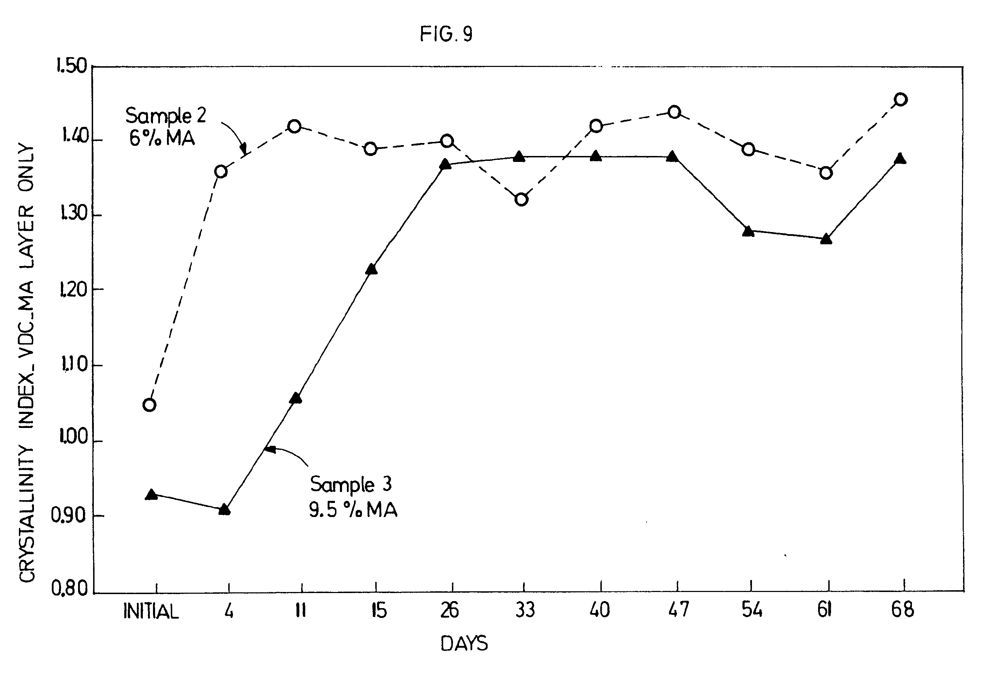

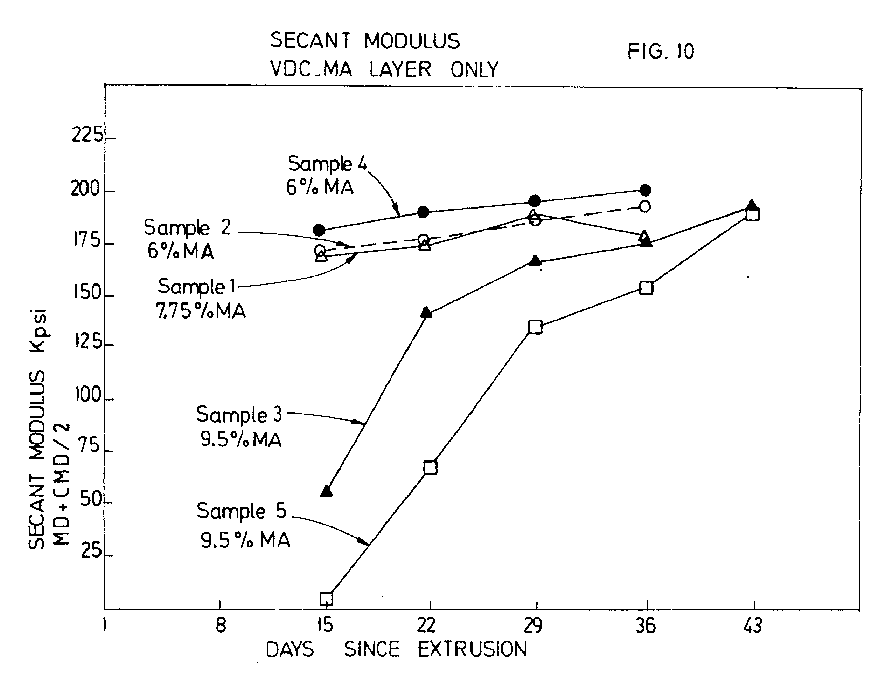

While FIGURES 2-7 illustrate properties of the films at a single point in time (4 weeks after extrusion fabrication), with respect to methylacrylate content, FIGURES 8, 9, and 10 illustrate the differences in the crystallinity index and the secant modulus of VDC-MA single layer films, including those of this invention, with respect to time. FIGURES 8 and 9 represent crystallinity with respect to time, a measure of the stiffness of the films. In FIGURE 8, sample 1 contains 7.75 percent MA, sample 4, 6 percent MA, and sample 5, 9.5 percent MA. In FIGURE 9, sample 2 contains 6 percent MA and sample 3 contains 9.5 percent MA. FIGURE 10 represents, for the films of FIGURES 8 and 9, the average of MD and CMD secant modulus with respect to time. The samples in FIGURE 10 correspond with similarly numbered samples in FIGURES 8 and 9.

Each of the films tested and reported in FIGURES 8-10 contained reportedly the same amount of the same additive, epoxidized linseed oil. However, the epoxidized linseed oil used in Samples 1, 4, and 5 for FIGURES 8 end 10 was different from, and was supplied by a different manufacturer than, the epoxidized linseed oil used in Samples 2 and 3 of FIGURES 9 and 10.

FIGURES 8 and 9 illustrate the crystallinity indexes, with respect to time, of a plurality of VDC-MA films having an MA content within the above recited range of MA contents. Crystallinity index measurements were made using a conventional 1R-ATR test method. Referring now to FIGURE 8, whereas the crystallinity of sample 4 (6 percent MA) stabilized at about 4 days, and sample 1 (7.75 percent MA) stabilized at about 11 days, the crystallinity of the VDC-MA sample 5 of this invention (9.5 percent MA) remained lower, and did not stabilize until approximately day 40.

Referring to FIGURE 9, whereas the crystallinity of sample 2 (6 percent MA) stabilized at about 4 days, the VDC-MA sample 3 (9.5 percent MA) of this invention stabilized at about 26 days. Thus, FIGURES 8 and 9 show that the VDC-MA copolymer films of this invention maintain a lower crystallinity for a significantly longer time than VDC-MA films having lower MA content.

Eventually, as seen in FIGURES 8 and 9, the crystallinity indexes of all the samples stabilized in the range of about 1.35 to 1.5. However, the films having higher MA content in the VDC-MA (samples 3 and 5) had measurably lower crystallinity index, for a longer period of time, than did the films having lower MA content in the VDC-MA (samples 1, 2, and 4). If one considers the crystallinity index value range within which the film crystallinity is considered to stabilize to be at about 1.35, end based on an interpolation of the lines in the FIGURES connecting the data points, the films having an MA content of 7.75 percent or less, e.g. less than about 8 percent (Samples 1, 2, and 4) all reached 1.35 to 1.5 crystallinity index within about the first 9 days, while the films having the 9.5 percent MA content (Samples 3 and 5) stayed below that range at least through day 23. Sample 5 remained below 1.35 at least through day 33, interpolated to be at least through day 36. Based on the interpolation of the curve drawn through the data points in FIGURE 9, the crystallinilty index of sample 3 stayed below that range through approximately day 23.

The significance of the crystallinity index is that it is an indication of the ease with which a film can be further fabricated, such as by thermoforming, orienting in the solid state, laminating, printing, rewinding, pouching, and the like. It further represents the brittleness of the film, and therefore its tendency to break or crack when subjected to physical or thermal shock. A film having a lower relative crystallinity index at a point in time is softer, and relatively more tolerant of the above processes and conditions. Therefore, a film which takes a longer time to reach its stabilized crystallinity index is softer, and relatively more tolerant of such processes and conditions over that same longer time (Samples 3 and 5, 9.5 percent MA) than a film which reaches its stabilized crystallinity index sooner (Samples 1, 2, and 4).

A film having a lower crystallinity index is more tolerant of physical and thermal shocks than a film having a higher crystallinity index. Films are subjected to such shocks in further converting operations (e.g. thermoforming and solid state molecular orientation), and in the handling involved in fabricating packages, in filling and sealing them, and in shipping the filled and sealed packages in the product distribution system. Therefore, to the extent the development of crystallinity can be retarded, as in samples 3 and 5, the films and other materiels can be more advantageously used for their intended purposes. As seen in FIGURES 8 and 9, those films having the higher methylacrylate content experienced lower crystallinity index for a longer period of time than those films having the lower methylacrylate content. Therefore, the higher MA content films provide the above desired advantages since they are more shock tolerant over a longer period of time.

FIGURE 10 illustrates the averages of the related properties of MD and CMD secant modulus of the films of FIGURES 8 and 9, wherein the average secant modulus of each of sample 3 and sample 5 is lower than, and remains lower than, that of each of Samples 1, 2, and 4 for greater than 36 days.

Each of the films tested and reported in FIGURES 8-10 contained reportedly the same amount of the same additive, epoxidized linseed oil. However, the epoxidized linseed oil used in Samples 1, 4, and 5 for FIGURES 8 and 10 was different from, and was supplied by a different manufacturer, than the epoxidized linseed oil used in Samples 2 and 3 of FIGURES 9 and 10.

The time related shock tolerance provided by the films of the invention having higher levels of MA is comparable to the shock tolerance which is conventionally achieved by adding a normal amount of a plasticizer, e.g. an EVA plasticizer to a VDC-MA having a lower level of MA. So the selection of a copolymer having the higher MA content according to the invention represents an alternate means of achieving the desired softness, flexibility, and resilience, with need of less or no plasticizer.

Use of the higher level of MA in the VDC-MA in accordance with the invention can provide a VDC-MA having a better barrier compared with an EVA plasticized VDC-MA having lower MA content. For example, use of normal amounts of about 5 percent EVA in e.g. a VDC-MA having 7.75 percent MA yields a film having an oxygen transmission rate at least 50 percent to 100 percent higher than a film made with the same VDC-MA composition but without the EVA plasticizer. By comparison, as seen in FIGURE 7, in films which differed only in MA content, and which did not contain plasticizer, an increase in MA content from 7.75 percent to 9.5 percent resulted in an increase in oxygen transmission rate of only about 20 percent (from 1.25 to 1.5), while still achieving the desired level of softness, flexibility, and resilience, by means of the higher MA content. So the desired levels of softness, flexibility, and resilience can be obtained in the films of the invention without the use of plasticizer, while maintaining a higher level of oxygen barrier than is obtained with an EVA plasticized VDC-MA resin having less than about 8 percent MA. Such properties of the films of the invention are represented, for example, by a secant modulus, MD/CMD average, of no more than 1137 MPa, preferably no more than 1033 MPa, more preferably no more than 689 MPa, all without use of plasticizer. Secant modulus of 689 MPa is seen in FIGURE 10 is seen for samples 3 and 5 at 15 days (e.g. 2 weeks) after film fabrication. After 22 days (e,g. 3 weeks) sample 5 is still below 689 MPa, while sample 3 is below 1033 MPa After 29 days (e.g. 4 weeks) sample 3 is at 1171 MPa, while sample 5 is still below 1033 MPa.

In some cases, a plasticizer is used with a high MA VDC-MA. Where a conventional amount of plasticizer is used (e.g. about 5 percent EVA), the film so obtained is softer than a conventional plasticized VDC-MA film having a lower MA content. However, less or no plasticizer is preferred, since the desired soft and flexible properties, as measured by e.g. secant modulus are achieved with less than e.g. 3 percent plasticizer, based on the total copolymer composition, preferably 1 percent or less, and more preferably no effective amount of plasticizer, whereby, with respect to the films of the invention, the above recited levels of secant modulus can be obtained.

As seen in FIGURES 8-10, the unplasticized films wherein the VDC-MA has at least about 8 percent MA retain improved softness, flexibility and /or resilience, compared to films having lower MA content VDC-MA, for at least 36 days. This provides a lengthened processing window wherein the films and/or structures made therefrom, can be further fabricated after being extruded. For example, a film containing a VDC-MA having 7.75 percent MA, but no plasticizer, reaches its stabilized crystallinity within 11 days (FIGURE 8). The high level of secant modulus seen in FIGURE 10 indicates that even during this 11 days (FIGURE 8), the conventional VDC-MA may not be practically processable. Meanwhile, a film containing a VDC-MA having 9.5 percent MA, and no plasticizer, does not reach a similar level of crystallinity until about day 40. Thus the VDC-MA having the higher level of MA (9.5 percent) provides a time window of opportunity (e.g. at least 29 days between day 11 and day 40) during which the film is more readily processable than is the film having a 7.75 percent MA composition. FIGURE 10 suggests a similar relationship between MA content of the VDC-MA and the properties of softness, resilience, and flexibility.

The practical use of the window of opportunity is that it provides sufficient time to fabricate a packaging product, or other product, in the manufacturing plant, while the VDC-MA is still susceptible to such processing. No comparable window of opportunity exists with unplasticized conventional (e.g. 7.75 percent MA) VDC-MA films, with respect to which it is common to resort to plasticizer to obtain the necessary softness and flexibility properties in the VDC-MA product, but this results in the above recited decrease in oxygen barrier properties.

The extruded products of this invention are unexpectedly softer and stronger than films containing VDC-MA having lower MA contents. Structures utilizing the high MA content VDC-MA's disclosed herein thermoform more easily and more quickly than structures made with VDC-MA's having lower MA content. Specifically, less oven heat is required, in preparation for thermoforming, to soften a structure having a layer of VDC-MA with high MA content. Therefore, thermoforming using these resins requires less oven residence time, whereby thermoforming production rates can be increased. Also, since the VDC-MA layer is softer, it is expected that the layer will be more uniform upon drawing, than with conventional VDC-MA.

As regards thermal converting operations, such as thermoforming, high levels of MA in the VDC-MA provide at least two advantages. First, since the high level of MA provides a softer structure, the VDC-MA is preferably exposed to the heat of e.g. the thermoforming oven for a shorter period of time. Accordingly, the VDC-MA receives less of the thermal energy which causes degradation. Second, the higher MA content VDC-MA (e.g. at least about 8 percent) is inherently less reactive/susceptible to thermal degradation stimuli.

Accordingly, because of its reduced level of heat-imposed degradation and greater thermal stability, the normal cutting scrap left after the e.g. thermoformed receptacles are separated from the sheet, which cutting scrap is approximately 50 percent of the sheet, is more tolerant of being ground up and reprocessed into more sheet.

The advantageous longer window of opportunity for further processing the extruded single and multilayer films and sheets containing the VDC-MA's of the invention can also apply to other processes in addition to the thermoforming process. Its advantages are most readily seen in converting processes wherein the VDC-MA remains in the solid state, for example solid state molecular orientation wherein the VDC-MA is heated to a temperature above its glass transition temperature and below its melting temperature, at which temperature it is stretched to achieve molecular orientation. Following such molecular orientation, the films so made are heat shrinkable, and are suitable for heat shrink use. If the shrink property is not desired, the films can be heat set, whereupon the heat shrink property is in large part eliminated, as is conventionally practiced with conventional molecular orientation processes.

The processes for fabricating films and sheet materials using a vinylidene chloride metbylacrylate copolymer having a methylacrylate content of at least about 8 percent are substantially the same as processes for processing vinylidene chloride methylacrylate copolymer having a lesser level of methylacrylate comonomer. Namely, the extruder pressures and the extruder temperatures are similar to those used for processing the more conventional VDC-MA. Thus melt temperature at the extruder exit is approximately 329 degrees F (165 degrees C). The die temperature at a conventional circular blown film die is approximately 329 degrees F. (165 degrees C).

Layers which can be coextruded with the VDC-MA layer preferably are so coextruded. Preferred coextrusion processes are disclosed in copending applications serial no. 07/140,096 and serial no. 07/204,485. As taught therein, it is preferred to space the VDC-MA from the internal surfaces of extrusion apparatus. For extrusion through a slot die, it is preferred to encapsulate the VDC-MA as it exits the extruder in which it is plasticated.

The vinylidene chloride methylacrylate copolymer of this invention can be used in any structure which has previously included an extruded layer of either vinylidene chloride vinyl chloride, a vinylidene chloride methylacrylate having a lesser amount of methylacrylate comonomer, or any of the other vinylidene chloride copolymers known in the art.

Illustrative of the films for structures comprised of the vinylidene chloride methylacrylate layer of this invention are illustrated below:

/EVA/VDC-MA/EVA/

/EVA/EVA/VDC-MA/EVA/

/PE/EVA/VDC-MA/EVA/PE/

/LDPE/EVA/VDC-MA/EVA/LDPE/

/LLDPE/EVA/VDC-MA/EVA/LLDPE/

/EVA/VDC-MA/EVA/EVA/PE/EVA/

/EVA/VDC-MA/EVA/PPE-Butene-1'eth CP/

/EVA-LLDPE/VDC-MA/EVA-LLDPE/

/EVA-LLDPE/tie/VDC-MA/tie/EVA-LLDPE/

/chlorinated PE +LDPE/tie/VDC-MA/tie/ chlorinated PE + LDPE/

/LDPE/tie/VDC-MA/tie/LDPE/

/LLDPE/tie/VDC-MA/tie/LLDPE/

/PE/VDC-MA/PE/

/PE/tie/VDC-MA/tie/PE/

/LLDPE + Eth butyl acrylate/VDC-MA/LLDPE + Eth butyl acrylate/

/LLDPE + Eth butyl acrylate/VDC-MA/

/LLDPE/tie/VDC-MA/tie/LLDPE/

/VLDPE/EVA/VDC-MA/EVA/VLDPE/

EP 0 435 792 A2

/PET/VDC-MA/Sealant/

/PET/VDC-MA/PET/Sealant/

/PET/EVA/VDC-MA/EVA/LDPE, LLDPE, or ionomer/

/PET/VDC-MA/PET/Impact/Sealant/

/PET/PP/MPP/VDC-MA/MPP/PP/PET/Sealant/

/PET/PP/MPP/VDC-MA/MPP/PP/PET/Impact/Sealant/

/PET/PP+color concentrate /5610A2[1]/VDC-MA/5610A2[1]/PP+color concentrate /PET/PP Sealant/

/PET/PP + color concentrate /5610A2[1]/VDC-MA/5610A2[1]/PP + color concentrate /PET/Impact[2]/PPSealant/

/PET/PP + color concentrate /5610A2[1]/ VDC-MA/5610A2[1]/PP/Impact[2]/PP Sealant/

/VDC-MA/HDPE/MHDPE/EVOH/

/Nylon$_6$ / Plexar 3/EVA/VDC-MA/EVA/Plexar 3/Ionomer/

/Nylon$_{6/12}$/VDC-MA/tie/Sealant/

/PP/MPP/VDC-MA/MPP/PP/

/PP/5610A2[1]/VDC-MA/5610A2[1]/PP/

/PP-EVA blend/ 5610A2[1]/VDC-MA/5610A2[1]/PP-EVA blend/

EP 0 435 792 A2

/PP/5610A2[1]/EVA/VDC-MA/EVA/5610A2[1]/PP/

/PP-EVA blend/5610A2[1]/EVA/VDC-MA/EVA/5610A2[1]/PP-EVA blend/

/PP + color    /5610A2[1]/VDC-MA/5610A2[1]/PP + color   /
  concentrate                                  concentrate

1. 5610A2 is a combination of about 70 percent polypropylene, 30 percent uthylene vinyl acetate copolymer (greater than 20 mole percent vinyl acetate) sold by Exxon Chemical Company.

2. Impact = e.g. Blend of PP (40-98 percent by weight), Tafmer A (2-60 percent by weight), and optionally up to 25 percent by weight PIB. Tafmer A is ethylene α-olefin copolymer, having elastomeric, or elastomer-like properties.

EP 0 435 792 A2

Polymer compositions which normally adhere with good adhesion to conventional VDC copolymers (e.g. VDC-VC and conventional VDC-MA), when coextruded therewith, adhere well to the VDC-MA copolymers which are part of this invention, when similarly coextruded therewith. Examples of such compositions include the well known extrudable adhesive polymers such as the PLEXARS, the BYNELS, the CXA's, and EVA having at least 15 percent vinyl acetate. Good adhesion to EVA is, for example, obtained with EXXON LD-761. Good adhesion to polypropylene is obtained with EXXON 5610A2. Other layers can be incorporates by conventional lamination processes e.g. adhesive lamination, extrusion lamination or corona bonding.

The multiple layer polymeric materials of this invention can include one or more non-polymeric layers. Such layers include paper, metal foil, and the like.

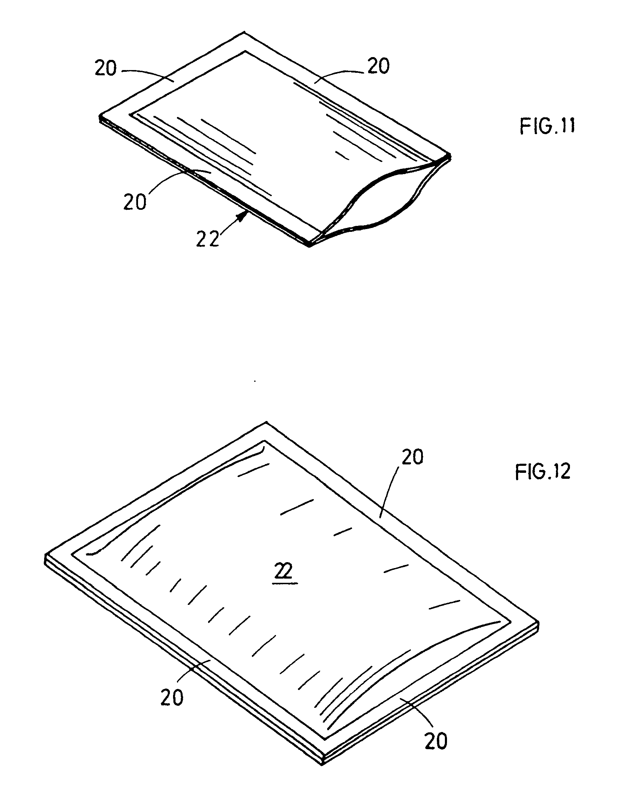

The single layer and multiple layer films, laminates, and other structures of this invention are readily fabricated into packages using conventional package fabricating processes and techniques. For example, adjoining portions of a film can be folded such that the adjoining portions face each other. The adjoining portions are then sealed to each other about a common periphery in fabrication of seals as seen at seals 20 in FIGURE 11. A pouch/package 22 is accordingly, fabricated having peripheral seals, and being open on one end thereof to receive product. After the pouch receives product, the open side is similarly sealed closed whereby a closed and sealed pouch is obtained, as illustrated in FIGURE 12.

Thus the invention provides improved materials utilizing the vinylidene chloride methylacrylate copolymers of the invention. The materials permit improved processing, and lower maintenance costs, and provide improved properties with respect to elongation, secant modulus, tensile energy absorption, and toughness as demonstrated in the dart drop test. Multiple layer films made according to the invention provide a time window of opportunity wherein they are softer, more flexible, and more resilient for a longer period of time than conventional lower MA content vinylidene chloride copolymer films having the same amount of plasticizer.

Those skilled in the art will now see that certain modifications can be made to the materials herein disclosed with respect to the preferred embodiments, without departing from the spirit of the instant invention. And while the invention has been described above with respect to its preferred embodiments, it will be understood that the invention is capable of numerous rearrangements, modifications and alterations, and all such rearrangements, modifications and alterations are intended to be within the scope of the appended claims.

## Claims

1. A polymeric film comprising a layer of a vinylidene chloride copolymer, said vinylidene chloride copolymer comprising vinylidene chloride and at least about 8 percent by weight methylacrylate.

2. A polymeric film as in Claim 1, said copolymer comprising at least about 8.5 percent by weight methylacrylate.

3. A polymeric film as in Claim 1, said copolymer comprising at least about 9 percent by weight methylacrylate,

4. A polymeric film as in Claim 1, said copolymer comprising about 9.5 percent by weight methylacrylate.

5. A polymeric film as in Claim 1, said copolymer comprising no more than about 10 percent by weight methylacrylate.

6. A polymeric film as in any one of claims 1 to 5, said vinylidene chloride copolymer layer having an average secant modulus of no more than 1137 MPa, as measured two weeks after fabrication of said film, said film having been stored at 23°C.

7. A polymeric film as in any one of claims 1 to 5, said vinylidene chloride copolymer layer having an average secant modulus of no more than 1033 MPa, as measured two weeks after fabrication of said film, said film having been stored at 23°C.

8. A polymeric film as in any one of claims 1 to 5, said vinyledene chloride copolymer layer having an average secant modulus of no more than 689 MPa, as measured two weeks after fabrication of said film said film having been stored at 23°C.

9. A polymeric film comprising a layer of a vinylidene chloride methylacrylate copolymer, said vinylidene chloride methylacrylate copolymer layer having less than 3 percent by weight of plasticizer, based on the total copolymer composition, and having an average secant modulus of no more than 1137 MPa, as measured two weeks after fabrication of said film, said film having been stored at 23°C.

10. A polymeric film as in claim 9, having an average secant modulus of no more than 1033 MPa.

11. A polymeric film as in claim 9, having an average secant modulus of no more than 689 MPa.

12. A polymeric film as in any one of claims 1 to 11, including a second polymeric layer.

13. A polymeric film as in claim 12, said second layer being adhered to said vinylidene chloride copolymer layer with good adhesion.

14. A polymeric film as in any one of claims 12 and 13, said film having been made by a coextrusion process.

15. A package made with a film of any of claims 1 to 14.

16. A material comprising a layer of a vinylidene chloride copolymer, said vinylidene chloride copolymer comprising 8 to 10 percent by weight methylacrylate.

17. A material as in claim 16, said vinylidene chloride copolymer layer having an average secant modulus of no more than 1137 MPa, as measured two weeks after fabrication of said material, said film having been stored at 23°C.

18. A material as in any one of claims 16 and 17, said material having been fabricated using a coextrusion process.

SECANT MODULUS
VDC-MA LAYER ONLY

MD

FIG.2A

WEIGHT PERCENT METHYLACRYLATE

SECANT MODULUS
VDC_MA LAYER ONLY

CMD

FIG.2 B

WEIGHT PERCENT METHYLACRYLATE

FIG.3A

FIG. 3 B

FIG. 4A

FIG. 4 B

10

FIG. 1A

12

16

14

18

FIG. 1 B

.25 — — J — 0,35

DART
DROP
VDC_MA LAYER ONLY

0,30

.20 —

.15 —

— 0,20

FOOT_POUNDS

.10 —

0,10

.05 —

FIG. 5

3  4  5  6  7  8  9  10

WEIGHT PERCENT METHYLACRYLATE

FIG. 6

FIG: 7

FIG. 8

FIG. 9

SECANT MODULUS
VDC_MA LAYER ONLY

FIG. 10

Sample 4
6% MA

Sample 2
6% MA

Sample 1
7.75% MA

Sample 3
9.5% MA

Sample 5
9.5% MA

SECANT MODULUS Kpsi
MD+CMD/2

DAYS SINCE EXTRUSION

EP 0 435 792 A2

FIG.11

FIG.12